**Europäisches Patentamt**

**European Patent Office**

**Office européen des brevets**

(19)

(11) Veröffentlichungsnummer : **0 002 718
B2**

(12) NEUE EUROPÄISCHE PATENTSCHRIFT

(45) Veröffentlichungstag der neuen Patentschrift :
**17.10.84**

(21) Anmeldenummer : **78101650.6**

(22) Anmeldetag : **13.12.78**

(51) Int. Cl.³ : **B 65 D 85/72**, B 65 D 81/24,
C 09 D 3/58

(54) **Verwendung eines Lackes auf Basis von Epoxidharz und einem Trimellitsäureanhydridestergemisch zur Innenbeschichtung von Metallbehältern für Lebensmittel oder Getränke.**

(30) Priorität : **23.12.77 CH 15959/77**

(43) Veröffentlichungstag der Anmeldung :
**11.07.79 Patentblatt 79/14**

(45) Bekanntmachung des Hinweises auf die Patenterteilung : **29.04.81 Patentblatt 81/17**

(45) Bekanntmachung des Hinweises auf die Entscheidung über den Einspruch : **17.10.84 Patentblatt 84/42**

(84) Benannte Vertragsstaaten :
**CH DE FR GB IT**

(56) Entgegenhaltungen :
**DE-A- 1 057 783**
**DE-A- 1 060 138**
**DE-A- 1 469 904**
**DE-A- 1 930 018**
**DE-A- 2 312 409**
**DE-A- 2 516 377**
**DE-A- 2 558 295**
**DE-B- 2 025 159**
**FR-A- 1 359 078**
**FR-A- 1 566 931**
**GB-A- 963 557**
**GB-A- 1 019 568**
**GB-A- 1 032 053**
**GB-A- 1 318 926**
**JP-A-52 095 748**
**JP-B-74 027 543**
**NL-A- 7 308 442**

(73) Patentinhaber : **CIBA-GEIGY AG**
**Postfach**
**CH-4002 Basel (CH)**

(72) Erfinder : **Knecht, Eduard**
**Rütlistrasse 2**
**CH-4051 Basel (CH)**

(74) Vertreter : **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun.**
**Bräuhausstrasse 4**
**D-8000 München 2 (DE)**

(56) Entgegenhaltungen :
**US-A- 3 183 248**
**US-A- 3 247 283**
**US-A- 3 264 235**
**Chem. Abstr. 81, 1974, 26679a**
**VW Qualitätsvorschrift für Farbmaterialien, Nr. 16, Blatt 1**
**Bundesgesundheitsblatt Nr. 13 vom 23. 6. 53, Seite 193**
**Federal Register Vol. 42, Nr. 50 vom 15. 3. 77, Seite 14544 - 14545**
**Die Akte enthält technische Angaben, die nach dem Eingang der Anmeldung eingereicht wurden und die nicht in dieser Patentschrift enthalten sind.**

## Beschreibung

Klarlacksysteme, die zur Herstellung von Überzügen in Konservendosen und ähnlichen Verpackungsmaterialien dienen, sind bereits bekannt. Sie enthalten Phenol-Formaldehyd-Harze in Kombination mit Epoxidharzen auf Bisphenol A-Basis oder Terephthalat-Copolyester in Kombination mit Melaminoder Benzoguaninharzen. Die damit hergestellten Überzüge lassen an mechanischer Verformbarkeit sowie an Geruchs- und Geschmacksfreiheit bzw. Säurebeständigkeit und Sterilisationsfestigkeit zu wünschen übrig. Diese Eigenschaften sind jedoch für Schutzlacke, welche zum Überziehen der Innenwände von Metallgefäßen, wie Dosen und Tuben, die zur Aufnahme von meist sauer reagierenden Lebensmitteln und Getränken oder auch Chemikalien mit saurer Reaktion dienen, verwendet werden, teils erwünscht, teils erforderlich.

Es wurde nun gefunden, daß man guthaftende, hochelastische und gegen organische Säuren sehr beständige Schutzüberzüge, welche zudem geruchs- und geschmackfrei und eine gute Verformbarkeit sowie Sterilisationsfestigkeit (2 Stunden, 120 °C, Wasser oder 2 %ige Essigsäure) aufweisen, erzielen kann, wenn man Lacke verwendet, welche neben Epoxidharz und gegebenenfalls Pigmenten teilweise mit einem Diol verestertes Trimellitsäureanhydrid enthalten.

Die Verwendung von teilweise verestertem Trimellitsäureanhydrid zusammen mit Epoxidharz in einem Lack zur Herstellung von Überzügen ist zwar bereits in der amerikanischen Patentschrift 3 183 248 beschrieben. Die dort genannten Ester werden durch Umsetzung von Trimellitsäureanhydrid mit einem Dioldiacetat erhalten, wobei es auf diese Weise gelingt, das Aufbrechen der Anhydridgruppen zu verhindern. Abgesehen davon, daß dieses Verfahren umständlich und aufwendig ist, führt es auch zu anderen Produkten als es die Produkte der vorliegenden Erfindung sind, welche durch Umsetzung von Trimellitsäureanhydrid mit einem Diol erhalten werden.

In der FR-PS 15 66 931 sind Trimellitsäureanhydrid-Diol-Kondensationsprodukte beschrieben, die zuzammen mit Epoxidharzen z. B. als Gießharze oder Beschichtungsmassen verwendet werden können. Weitere Trimellitsäureanhydrid-Diol-Kondensationsprodukte sind in den britischen Patentschriften 963 557, 1 318 926 und 1 019 568 beschrieben. Sie werden als Komponenten in Pulverlacken eingesetzt und brauchen daher in organischen Lösungsmitteln nicht löslich zu sein. Es handelt sich um Gemische von verschiedenartigen Estern mit mehr oder weniger in organischen Lösungsmitteln unlöslichen Anteilen, welche sie für die Anwendung in lösungsmittelhaltigen Lacken ungeeignet machen.

Die Erfindung betrifft die Verwendung eines Lackes, enthaltend

(1) mindestens ein in organischen Lösungsmitteln lösliches Epoxidharz,
(2) ein Trimellitsäureanhydridestergemisch, erhalten durch Erhitzen von Trimellitsäureanhydrid zusammen mit mindestens einem Diol im Molverhältnis von 2 : 1,25 während mindestens 4 Stunden bei 190 °C bis 250 °C und mindestens zeitweise bei einem Aussendruck von 6,6 bis 39,9 mbar in Abwesenheit eines Katalysators,
(3) ein organisches Lösungsmittel,
(4) übliche für Lacke verwendete Zusatzstoffe und
(5) gegebenenfalls Pigmente,

zur Innenbeschichtung von Metallbehältern für Lebensmittel oder Getränke.

Dabei können bis zu 20 Gewichtsprozent des Trimellitsäureanhydrids durch ein anderes organisches Säureanhydrid oder durch eine organische Dicarbonsäure ersetzt sein, z. B. durch 15 % Adipinsäure oder Sebacinsäure. Als Diole verwendet man z. B. Neopentylglykol, 1,6-Hexylenglykol, 1,3-Propylenglykol oder Gemische von zwei oder mehr solcher Diole.

Im allgemeinen geht man bei der Herstellung des Trimellitsäureanhydridestergemisches so vor, daß man in die nahezu klare Trimellitsäureanhydrid-Schmelze bei einer Temperatur zwischen 185 °C und 190 °C tropfenweise das oder die Diole zugibt und die Temperatur unter fortwährendem Abdestillieren von Wasser langsam steigert, z. B. auf 200-215 °C, wobei man gleichzeitig, mindestens aber in der zweiten Hälfte der Zeit den Außendruck auf 26,6-33,3 mbar senkt. Im Verlaufe dieser Kondensationsreaktion kann man durch Entnehmen von Proben und Bestimmen der Säureäquivalente feststellen, daß der Anhydridgehalt des entstehenden Esters ansteigt und der Carbonsäuregruppengehalt sinkt. Beispielsweise sind auf diese Weise 1 664 g Trimellitsäureanhydrid mit 336 g Glykol umgesetzt und folgende Kennzahlen bestimmt worden :

| Probe | Anhydridäquivalent/kg | Säureäquivalent/kg |
|---|---|---|
| Nach beendeter Zugabe des Glykols | 0,61 | 7,03 |
| Nach 1 Stunde (195-200 °C) | 1,25 | 5,75 |
| Nach 2 Stunden (200-215 °C) | 2,65 | 2,95 |
| Nach 3 Stunden (215-220 °C) | 2,93 | 2,93 |
| Nach 4 Stunden (etwa 220 °C) | 3,20 | 1,85 |

Als übliche für Lacke verwendete Stoffe seien hauptsächlich Verlaufsmittel, wie Acrylpolymere, Silikon und fluorierte Kohlenwasserstoffe, ferner Härtungsbeschleuniger wie Zinn(II)-octoat und physiologisch unbedenkliche lösliche Farbstoffe erwähnt. Als Pigmente seien anorganische Pigmente wie Titandioxid und Eisenoxide genannt.

Da der Lack für die Innenlackierung von Lebensmittel enthaltenden Dosen verwendet wird, wirkt sich die Abwesenheit eines Katalysators bei der Herstellung des Estergemisches günstig aus, da üblicherweise verwendete Katalysatoren, wie Dibutylzinn(IV)-dilaurat, in der Schutzschicht zurückbleiben und dort unerwünscht sind.

Als Epoxidharze sind solche auf Bisphenol A-Basis mit einem Epoxidgehalt von 1-2, vorzugsweise 1-1,5 Äquivalenten/kg bevorzugt. Neben derartigen Harzen können auch Epoxidharze mit höherem oder tieferem Epoxidgehalt mitverwendet werden.

Als organische Lösungsmittel kommen die für Lacke üblicherweise verwendeten Lösungsmittel, welche mit Anhydridgruppen nicht reaktionsfähig sind, in Frage, vor allem polare Lösungsmittel, wie Ester, z. B. Äthylglykolacetat und Methylglykolacetat, oder Ketone, wie z. B. Methylisobutylketon, Cyclohexanon u. a.

Als Material für die zu beschichtenden Behälterinnenflächen kommen Weiß- und Schwarzbleche, TFS-Bleche (tin free steel) und Aluminiumbleche in Frage. Die Bleche können vorbehandelt, z. B. phosphatiert oder passiviert werden.

## Beispiel

384 g (2,0 Mol) Trimellitsäureanhydrid werden in einem Reaktionsgefäß während 45 Minuten bei 180 °C geschmolzen. Danach werden bei gleicher Temperatur während 45 Minuten 77,5 g (1,25 Mol) Äthylenglykol zugetropft. Die Mischung wird auf 220 °C erhitzt und zugleich der Außendruck auf 19,9 mbar gesenkt. Während 4 Stunden werden nun 29,5 g Wasser abdestilliert. Das zurückbleibende Reaktionsprodukt weist nach dem Abkühlen einen Schmelzpunkt von etwa 88 °C, eine Säurezahl von 460 und 3,2 Anhydridgruppenäquivalente pro kg auf.

Unter Verwendung dieses Trimellitsäureanhydrid-Esters werden 2 Lacke (A und B) hergestellt. Folgende Epoxidharze werden dazu gebraucht :

Epoxidharz a :
Bisphenol A-Basis, Epoxidgehalt : 1 Äquivalent/kg (Molekulargewicht : 2 000) ;
Epoxidharz b :
Bisphenol A-Basis, Epoxidgehalt : 1,3 Äquivalent/kg (Molekulargewicht : 1 500) ;
Epoxidharz c :
Bisphenol A-Basis, Epoxidgehalt : 0,25 Äquivalent/kg (Molekulargewicht : 8 000).

|  | A | B |
|---|---|---|
| Lackzusammensetzung (Gewichtsteile) |  |  |
| Epoxidharz a | 1 000 | — |
| Epoxidharz b |  | 750 |
| Epoxidharz c |  | 350 |
| Trimellitsäureanhydrid-Glykolester | 122 | 135 |
| Verlaufmittel « ACRONAL 4F » *) (20 %ige Lösung) | 28 | 30 |
| Titandioxid | — | 827 |
| Äthylglykolacetat | 1 106 | 2 044 |
| Lacklösungen (50 % Festsubstanz) | 2 256 | 4 136 |
| Eigenschaften des Lacküberzugs (nach Härtung bei 205 °C während 10 Minuten) |  |  |
| Filmdicke (μm) | 10-12 | 10-12 |
| Härte (Sekunden, nach Persoz) | 340 | 320 |
| Glanz (<) 60 °C, Gardner |  | > 95 |
| Schlagtiefung (cm/kg) | > 160 | > 160 |
| H₂O-Sterilisierfestigkeit (60 Minuten bei 120 °C) | unverändert | unverändert |
| Essigsäure 2 %ig, 6 Stunden bei 98 °C | unverändert | unverändert |
| Essigsäure 5 %ig/Weinsäure 2 %ig, 4 Stunden bei 98 °C | unverändert | unverändert |

*) « ACRONAL 4F » ist ein Weichharz aus Polyacrylsäure-n-butylester der BASF. Viskosität der 50 %igen Äthylacetatlösung : 40-60 Sek. DIN-Becher (4 mm).

# 0 002 718

## Vergleichsbeispiel

Der Trimellitsäureanhydridglykolester gemäß Beispiel 1 (= Ester 1) wird in der folgenden Tabelle mit einem Ester verglichen, der gemäß Beispiel 1 der US-Patentschrift 3 183 248 hergestellt worden ist (= Ester V).

| Eigenschaft | Ester 1 | Ester V |
|---|---|---|
| Säurezahl | 463 | 527 |
| Anhydridgruppen/kg | 3,2 | 3,7 |
| Freie Carboxylgruppen | 1,85 | 2,0 |
| Löslichkeit in dest. $H_2O$ | − | + |
| Äthylglykolacetat | + | + |
| Methyläthylketon | ± | + |
| Methylisobutylketon | ± | + |

+ = klarlöslich in 40 %iger Lösung.
± = teilweise löslich.
− = unlöslich.

Der Vergleichsester (Ester V) wird unter A in Beispiel 1 mit dem Epoxidharz a und den übrigen erwähnten Bestandteilen zu einem Lack verarbeitet. Der klare Einbrennlack wird auf Blech aufgesprüht. Nach 10 Minuten bei 190 °C ergibt sich ein Film von 10-12 μm Dicke. Im Gegensatz zum Film von Lack A, der eine sehr gute, unveränderte Sterilisierfestigkeit (destilliertes Wasser während 60 Minuten bei 120 °C) aufweist, ist die Sterilisierfestigkeit des aus dem Ester V erzeugten Films gering : der Film zeigt starkes Weißanlaufen (blushing). Auch die Haftfestigkeit des Vergleichsfilms ist wesentlich schlechter.

## Ansprüche

1. Verwendung eines Lackes, enthaltend

(1) mindestens ein in organischen Lösungsmitteln lösliches Epoxidharz,
(2) ein Trimellitsäureanhydridestergemisch, erhalten durch Erhitzen von Trimellitsäureanhydrid zusammen mit mindestens einem Diol im Molverhältnis von 2 : 1,25 während mindestens 4 Stunden bei 190 °C bis 250 °C und mindestens zeitweise bei einem Außendruck von 6,6 bis 39,9 mbar in Abwesenheit eines Katalysators,
(3) ein organisches Lösungsmittel,
(4) übliche für Lacke verwendete Zusatzstoffe und
(5) gegebenenfalls Pigmente,

zur Innenbeschichtung von Metallbehältern für Lebensmittel oder Getränke.

2. Verwendung gemäß Anspruch 1, dadurch gekennzeichnet, daß der Lack ein Trimellitsäureanhydridestergemisch enthält, in welchem bis zu 20 Gewichtsprozent des Trimellitsäureanhydridrestes durch einen organischen Dicarbonsäurerest ersetzt ist.

3. Verwendung gemäß Anspruch 1, dadurch gekennzeichnet, daß der Lack als Lösungsmittel einen Ester, insbesondere Äthylglykolacetat, oder ein Keton enthält.

## Claims

1. Use of a lacquer containing

(1) at least one epoxide resin soluble in organic solvents,
(2) a trimellitic anhydride ester mixture, obtained by heating trimellitic anhydride together with at least one diol, in the molar ratio of 2 : 1.25, for at least 4 hours at 190 °C to 250 °C, at an external pressure of 6.6 to 39.9 mbar for at least part of the time, and in the absence of a catalyst,
(3) an organic solvent,
(4) additives customarily used for lacquers, and
(5) optionally pigments,

for the interior coating of metal containers for foodstuffs or drinks.

2. Use according to Claim 1, characterised in that the lacquer contains a trimellitic anhydride ester mixture in which up to 20 per cent by weight of the trimellitic anhydride is replaced by an organic dicarboxylic acid.

4

3. Use according to Claim 1, characterised in that the lacquer contains an ester, particularly ethyl glycol acetate, or a ketone as the solvent.

**Revendications**

1. Utilisation d'un vernis contenant :

(1) au moins une résine époxydique soluble dans des solvants organiques,
(2) un mélange d'esters dérivant de l'anhydride trimellitique, que l'on a obtenu en chauffant l'anhydride trimellitique avec au moins un diol dans un rapport molaire de 2 : 1,25, pendant au moins 4 heures à 190-250 °C, et, au moins par moments, sous une pression extérieure de 6,6 à 39,9 mbar, en l'absence de catalyseur,
(3) un solvant organique,
(4) des additifs ordinairement utilisés pour les vernis et
(5) éventuellement des pigments,

pour le revêtement intérieur de récipients métalliques destinés à des produits alimentaires ou à des boissons.

2. Utilisation selon la revendication 1, caractérisée en ce que le vernis contient un mélange d'esters de l'acide trimellitique dans lequel une certaine proportion, pouvant aller jusqu'à 20 % en poids, du radical d'anhydride trimellitique est remplacée par un radical d'acide dicarboxylique organique.

3. Utilisation selon la revendication 1, caractérisée en ce que le vernis contient, comme solvant, un ester, plus spécialement l'acétate de l'éthyl-glycol, ou une cétone.